# FASCICULE DE BREVET EUROPEEN

(11) **EP 1 232 933 B1**
(45) Date de publication et mention de la délivrance du brevet: **08.12.2004**
(21) Numéro de dépôt: 02290350.4
(22) Date de dépôt: 13.02.2002
(51) Int. Cl.: B62D 25/12

(54) **Capot ouvrant pour chariot transpalette.**
Haubenanordnung für Palettenhubwagen
Opening trunk lid for industrial vehicle

(30) Priorité: 14.02.2001 FR 0101993
(43) Date de publication de la demande: 21.08.2002
(73) Titulaire: LOC Manutention (Société Anonyme), 95310 Saint Ouen L'Aumone (FR)
(72) Inventeur: Quentin, Luc Guy Yves, 95350 St Brice sous Foret (FR)
(74) Mandataire: Lepeudry-Gautherat, Thérèse

(56) Documents cités:
- DE-A- 3 730 329
- DE-A- 4 228 549
- GB-A- 2 345 673

## Description

L'invention se situe dans le domaine technique des chariots de manutention et de levage du genre transpalettes ou gerbeurs et porte plus particulièrement sur un capot ouvrant notamment le capot fermant le compartiment batterie de l'engin.

Jusqu'à présent ces capots, voir par exemple celui montré dans le document GB-A-2345673 qui montre les caractéristiques du préambule de la revendication 1, disposent latéralement de deux axes latéraux de pivotement, en prise directe avec les flancs métalliques du chariot. Ce type d'articulation classique nécessite l'emploi d'outils pour le montage ou le démontage et implique la fabrication de systèmes axe-écrou adaptables à ces capots. En outre ceux-ci doivent disposer intérieurement de nervures de renforcement rapportées ou moulées dans la masse pour rigidifier l'ensemble.

En vue d'améliorer la qualité et la solidité du produit, en même temps que d'en diminuer les coûts de production, la Demanderesse a mis au point un capot moulé en une pièce à charnière intégrée facilement démontable, qui ménage intérieurement un espace accru pour le compartiment protégé, grâce à une disposition intéressante de ses nervures de renforcement.

L'invention a donc pour objet principal un capot ouvrant pour chariot de manutention du genre transpalette, destiné à coiffer et fermer un compartiment supérieur de l'engin, ledit capot ayant la forme d'une coquille allongée, capot selon lequel, à proximité de chacune de ses parois latérales est intégrée une charnière formée d'une partie extérieure au capot et d'une partie intérieure au capot et qui constitue une nervure de renforcement, ladite charnière étant moulée d'une seule pièce avec le capot.

Plus précisément, la partie extérieure de la charnière forme un bec orienté vers le haut, dont l'extrémité est pourvue d'un orifice et le capot présente une face arrondie à sa partie supérieure sur laquelle vient en appui la charnière faisant nervure de renforcement.

D'autres caractéristiques de l'invention apparaîtront à la lecture de la description qui va suivre d'une forme de réalisation montrée comme exemple, dans laquelle il est fait référence aux dessins annexés qui représentent :
figure 1, une vue du dessus du capot selon l'invention.
Figure 2, une vue de face du capot.

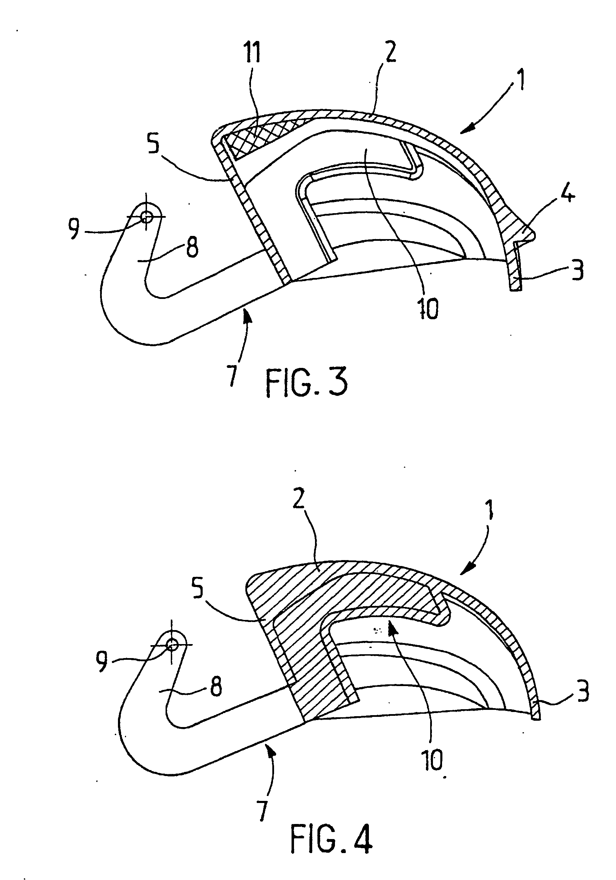

Figures 3 et 4, des vues en coupe respectivement selon III-III et IV-IV de la figure 2.
Figure 5, une vue du dessus du capot équipé d'une entretoise selon une variante de réalisation de l'invention.
Figure 6, une vue en perspective à plus grande échelle, montrant la fixation de l'entretoise au capot.
Figure 7, une vue en coupe transversale de l'entretoise.

On voit sur les figures un capot 1 en matière plastique moulée destiné à coiffer et fermer un compartiment supérieur non représenté d'un chariot transpalette. Le capot en forme de coquille allongée présente une face supérieure arrondie 2 se prolongeant jusqu'à une partie verticale avant 3 laquelle est munie en son centre d'une poignée 4. La face arrière 5 du capot est rectiligne. Enfin deux parois latérales 6 ferment la coquille et rigidifient l'ensemble.

A proximité de ces parois latérales 6 est intégrée une charnière 7 dont la partie extérieure au capot 1 forme un bec 8 orienté vers le haut, dont l'extrémité est pourvue d'un orifice 9. Intérieurement au capot, la charnière 7 se prolonge par une nervure de renforcement 10 qui longe la face rectiligne 5 et vient également en appui sur l'arrondi de la face supérieure 2. La charnière est moulée en une seule pièce avec le capot et participe donc aussi à sa rigidification. Eventuellement des nervurages complémentaires 11 sont prévus à différents endroits du capot entre les différentes faces. Ils permettent de renforcer des zones où peuvent être fixés des accessoires de l'engin.

Ainsi réalisé le capot est aisément fixé et s'articule sur des sortes de tiges ou tringles prévues à l'arrière du compartiment à protéger. Les charnières étant disposées sur les cotés du capot, l'espace intérieur du compartiment est donc libéré, ce qui permet de loger aisément des accessoires, notamment un chargeur de batterie.

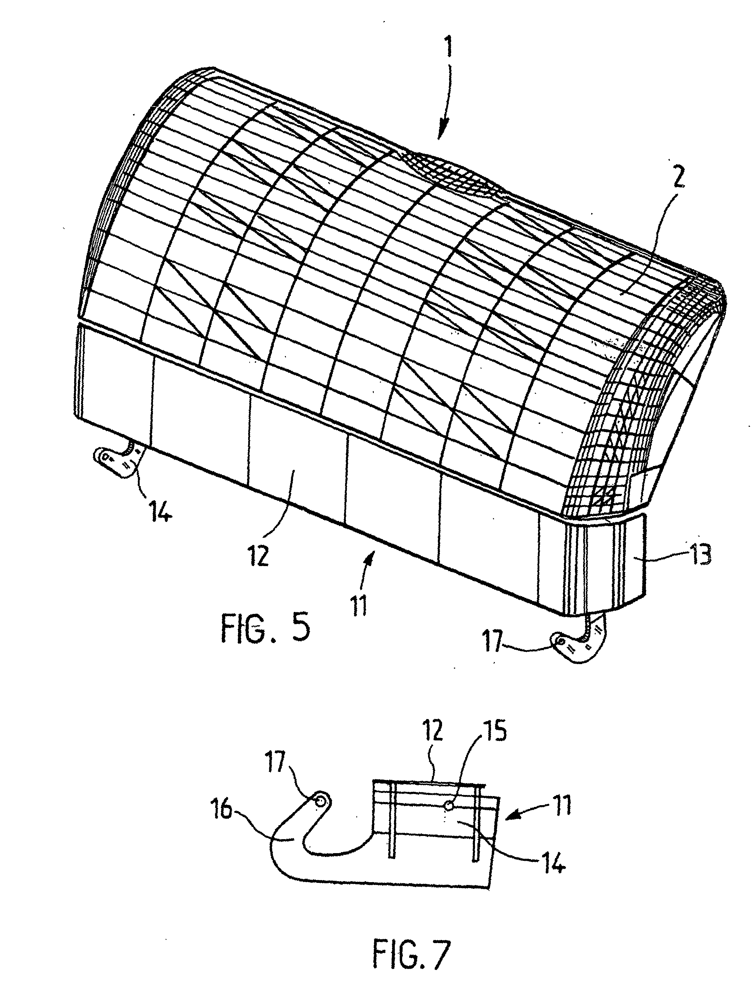

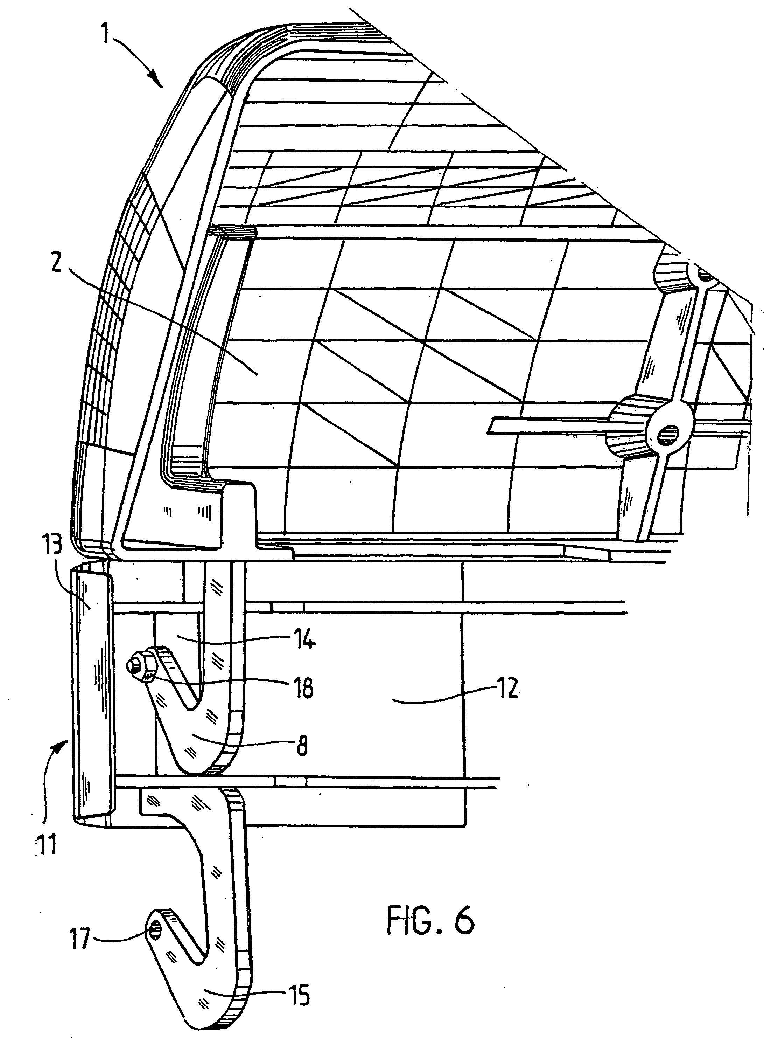

Dans le cas où le compartiment supérieur du chariot est plus large que le capot standard décrit précédemment, on peut adapter audit capot une entretoise telle que représentée aux figures 5 à 7.

Cette entretoise 11 est destinée à prolonger la face supérieure arrondie 2 du capot 1 auquel elle est fixée rigidement. L'entretoise, dont la partie supérieure 12 est plane, dispose aussi de parois latérales 13 faisant retour vers le bas, qui prolongent les parois latérales 6 du capot. Une nervure 14, prévue à l'intérieur de l'entretoise, à chacune de ses extrémités, porte un orifice 15 servant à la fixation par un boulon 18 de l'extrémité du bec 8 du capot. On voit notamment à la figure 5 que l'entretoise 11 se trouve ainsi solidarisée au capot 1.

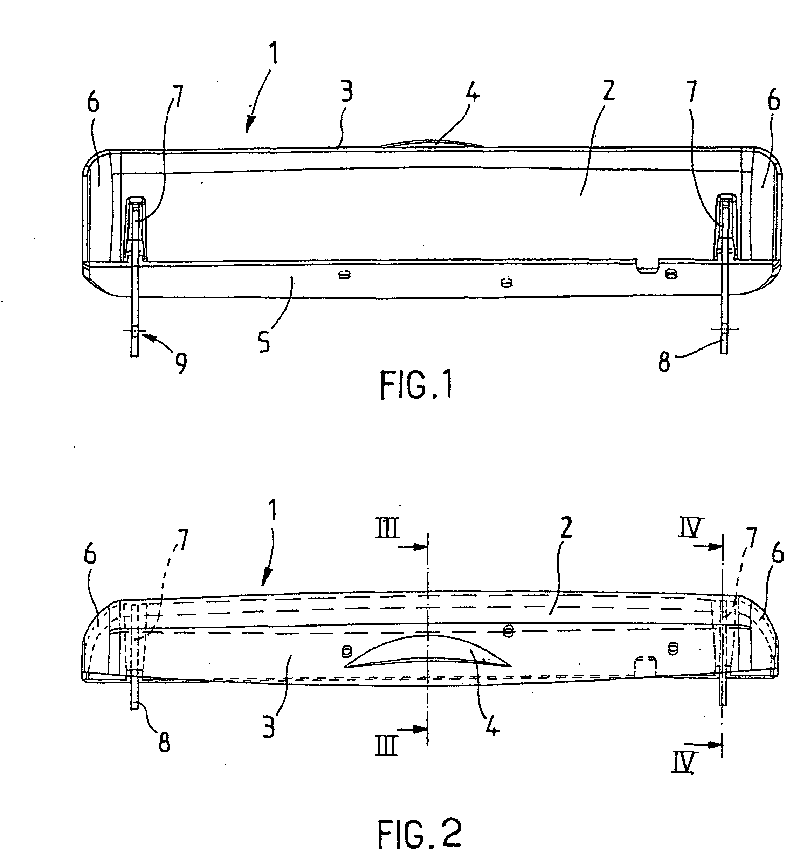

L'ensemble de ces deux pièces s'articule, sur la partie supérieure du compartiment du chariot, de la même façon que le capot 1 des figures 1 et 2. Pour cela l'entretoise est équipée à ses deux bouts d'un bec 16, homothétique du bec 8 et également pourvu d'un orifice 17 d'extrémité, comme le montre plus précisément la figure 7.

Ce bec 16 prolonge aussi la nervure 14.

Bien entendu, le constructeur peut prévoir des entretoises de diverses largeurs, permettant d'adapter le capot de base à toutes largeurs des compartiments de chariot.

## Revendications

1. Capot ouvrant pour chariot de manutention du genre transpalette, destiné à coiffer et fermer un compartiment supérieur de l'engin, ledit capot ayant la forme d'une coquille allongée, **caractérisé en ce que**, à proximité de chacune des parois latérales (6) du capot (1) est intégrée une charnière (7), formée d'une partie (8) extérieure au capot et d'une partie (10) intérieure au capot et qui constitue une nervure de renforcement, ladite charnière étant moulée d'une seule pièce avec le capot.

2. Capot ouvrant selon la revendication 1, **caractérisé en ce que** la partie extérieure au capot (1), de la charnière (7), forme un bec (8) orienté vers le haut, dont l'extrémité est pourvue d'un orifice (9).

3. Capot ouvrant selon la revendication 1, **caractérisé en ce que** le capot (1) présente une face supérieure arrondie (2) et une face arrière (5) rectiligne.

4. Capot ouvrant selon les revendications 1 et 3 **caractérisé en ce que** la partie intérieure au capot (1), de la charnière (7), forme une nervure de renforcement (10) qui longe la face arrière rectiligne (5) et vient en appui sur l'arrondi de la face supérieure (2).

5. Capot ouvrant selon les revendications 1 à 3 **caractérisé en ce que** une entretoise (11) est fixée rigidement au capot (1) dont elle prolonge la face supérieure arrondie (2), pour adapter l'ensemble à un compartiment supérieur plus large du chariot.

6. Capot ouvrant selon les revendications 2 et 5 **caractérisé en ce que** une nervure (14) prévue à chaque extrémité, à l'intérieur de l'entretoise (11), sert à la fixation de l'extrémité du bec (8) du capot (1).

7. Capot ouvrant selon les revendications 2 et 5 **caractérisé en ce que** l'entretoise (11) est équipée à ses deux bouts, d'un bec (16) homothétique du bec (8) du capot (1).

## Patentansprüche

1. Haube zum Öffnen, bestimmt für einen Palettenhubwagen, um ein oberes Abteil des Fahrzeugs zu überdecken und zu verschließen, wobei die Haube die Form einer länglichen Muschel aufweist,
**dadurch gekennzeichnet, dass** in die Haube (1) in der Nähe jeder der Seitenwände (6) ein Scharnier (7) integriert ist, das einerseits durch einen außerhalb der Haube befindlichen Teil (8) gebildet wird und andererseits durch einen innerhalb der Haube befindlichen Teil (10), der eine Verstärkungsrippe bildet, wobei das genannte Scharnier und die Haube als ein Stück gegossen werden.

2. Haube zum Öffnen nach Anspruch 1, **dadurch gekennzeichnet, dass** der außerhalb der Haube (1) befindliche Teil des Scharniers (7) einen nach oben gerichteten Schnabel (8) bildet, dessen Ende eine Öffnung (9) aufweist.

3. Haube zum Öffnen nach Anspruch 1, **dadurch gekennzeichnet, dass** die Haube (1) eine gerundete Oberseite (2) und eine geradlinige Rückseite (5) aufweist.

4. Haube zum Öffnen nach den Ansprüchen 1 und 3, **dadurch gekennzeichnet, dass** der innerhalb der Haube (1) befindliche Teil des Scharniers (7) eine Verstärkungsrippe (10) bildet, die sich längs der geradlinigen Rückseite (5) erstreckt und die Rundung der Oberseite (2) unterstützt.

5. Haube zum Öffnen nach den Ansprüchen 1 bis 3, **dadurch gekennzeichnet, dass** ein Distanzstück (11) starr an der Haube (1) befestigt ist, deren gerundete Oberseite (2) es verlängert, um das Ganze an ein breiteres oberes Abteil des Wagens anzupassen.

6. Haube zum Öffnen nach den Ansprüchen 2 und 5, **dadurch gekennzeichnet, dass** eine im Innern des Distanzstücks (11) an jedem Ende vorgesehene Rippe (14) zur Befestigung des Endes des Schnabels (8) der Haube (1) dient.

7. Haube zum Öffnen nach den Ansprüchen 2 und 5, **dadurch gekennzeichnet, dass** das Distanzstück (11) an seinen beiden Enden einen dem Schnabel (8) der Haube (1) ähnlichen Schnabel (16) aufweist.

## Claims

1. An openable cover for a material handling truck of the pallet truck kind, designed to fit over and close an upper compartment of the machine, the said cover being in the shape of a long shell and **characterized in that**, close to each of the side walls (6) of the cover (1) is an integral hinge (7) formed partly by a part (8) external to the cover and partly by a part (10) internal to the cover and forming a reinforcing rib, the said hinge being moulded in one piece with the cover.

2. An openable cover according to claim 1, **characterized in that** the part of the hinge (7) external to the cover (1) forms an upward-extending arm (8) whose end contains a hole (9).

3. An openable cover according to claim 1, **characterized in that** the cover (1) has a rounded upper face (2) and a straight rear face (5).

4. An openable cover according to claims 1 and 3, **characterized in that** the part of the hinge (7) internal to the cover (1) forms a reinforcing rib (10) along the straight rear face (5) and bears on the rounded portion of the upper face (2).

5. An openable cover according to claims 1 to 3, **characterized in that** an extension piece (11) is fixed rigidly to the cover (1), of which it continues the rounded upper face (2), to adapt the whole to a wider upper compartment of the truck.

6. An openable cover according to claims 2 and 5, **characterized in that** a rib (14) at each end, inside the extension piece (11), is used to fix it to the end of the arm (8) of the cover (1).

7. An openable cover according to claims 2 and 5, **characterized in that** the extension piece (11) is equipped, at both of its ends, with an arm (16) which is homothetic to the arm (8) of the cover (1).
